# EUROPÄISCHE PATENTSCHRIFT

(11) **EP 0 843 105 B1**
(45) Veröffentlichungstag und Bekanntmachung des Hinweises auf die Patenterteilung: **16.06.2004**
(21) Anmeldenummer: 97810788.6
(22) Anmeldetag: 22.10.1997
(51) Int. Cl.: F16B 43/00, F16B 31/02

(54) **Befestigungselement**
Fixing device.
Elément de fixation.

(30) Priorität: 13.11.1996 DE 19646951
(43) Veröffentlichungstag der Anmeldung: 20.05.1998
(73) Patentinhaber: HILTI Aktiengesellschaft, 9494 Schaan (LI)
(72) Erfinder: Rohrmoser, Günter, 6812 Meiningen (AT); Sprenger, Markus, 9492 Eschen (LI); Rass, Franz, 6372 Oberndorf/T. (AT)
(74) Vertreter: Wildi, Roland

(56) Entgegenhaltungen:
- EP-A- 0 467 070
- GB-A- 1 139 175
- US-A- 3 476 009
- US-A- 4 518 282
- US-A- 4 959 938

## Beschreibung

Die Erfindung betrifft ein Befestigungselement gemäss dem Oberbegriff des Patentanspruchs 1.

Für die Befestigung eines Bauteiles an der Oberfläche eines Untergrundes wird ein Befestigungselement verwendet, wie es beispielsweise aus der DE 40 19 157 bekannt ist. Dieses Befestigungselement weist eine tellerförmige Wölbung, einen von einem flachen Kreisring gebildeten Randbereich, einen in Umfangsrichtung geschlossenen, umlaufenden freien Tellerrand, eine zentrale Durchgangsbohrung, einen Boden und eine Anschlagschulter auf. Durch die Durchgangsbohrung hindurch ist ein an einem Untergrund festlegbares Verankerungselement steckbar. Der als flacher Kreisring ausgebildete Randbereich des Befestigungselementes erstreckt sich in einer senkrecht zur Durchgangsbohrung stehenden Ebene. Über eine parallel zur Achse der Durchgangsbohrung in Richtung Tellerrand vom Boden beabstandeten, zu diesem hinweisenden, die Durchgangsbohrung umgebende Anschlagschulter wird das Befestigungselement unter Zwischenlage des Bauteiles vom Verankerungselement zur Oberfläche des Untergrundes gezogen.

Da der als flacher Kreisring ausgebildete Randbereich dem Befestigungselement insbesondere in vertikaler Richtung eine sehr hohe Formfestigkeit verleiht, eignet sich dieses Befestigungselement beispielsweise nicht zur Befestigung eines Bauteiles, von dem schlagartige Zugkräfte ausgehen. Schlagartige, auf das Befestigungselement wirkende Zugkräfte treten zum Beispiel auf, wenn das auf einem, von mehreren voneinander beabstandeten Trägem gebildeten Untergrund befestigte Bauteil schlagartig belastet wird, so dass es sich zwischen den Trägem durchbiegt und gesamthaft verformt.

tnsbesonder beim Auftreten von schlagartig auftretenden Zugkräften kann ein Versagen des Befestigungspunktes in der Weise erfolgen, dass sich die Durchgangsbohrung des Befestigungselementes radial aufweitet, bis das Befestigungselement vom Verankerungselement abgezogen werden kann. Es besteht auch die Gefahr, dass eine Beschädigung des Verankerungselementes auftreten kann, oder dass die Verbindung zwischen dem Verankerungselement und dem Untergrund zerstört wird.

Aus der US 4 518 282 ist eine Lagerplatte mit einem Boden, einer von diesem Boden beabstandeten Öffnung und einem, in einer Ebene senkrecht zu einer Achse der Öffnung verlaufenden Randbereich bekannt. Zwischen dem Boden und dem Randbereich erstreckt sich eine, über eine zylindrische Vertiefung verstärkte Wand.

Aus der US 3 476 009 sind verschiedenartige Federscheiben bekannt. Diese Federscheiben weisen eine, von einer Anschlagschulter umgebene Öffnung auf. Bei diesen Federscheiben geht direkt von der Anschlagschulter eine Fläche aus, die zu einer Achse der Öffnung in einem flachen Winkel geneigten ist. Bei einer speziell ausgestalteten Federscheibe dieser Art, ist die Fläche gewellt ausgebildet. Der Randbereich dieser gewellten Fläche verläuft dabei parallel zu der Achse der Öffnung.

Aufgabe der vorliegenden Erfindung ist es, ein Befestigungselement zu schaffen, das eine sichere Befestigung eines Bauteile auf dem Untergrund gewährleistet, das Zugkräfte innerhalb eines definierten Zugkraftbereiches fedemd abfängt und das anzeigt wenn Zugkräfte aufgetreten sind, die oberhalb des definierten Zugkraftbereiches liegen.

Diese Aufgabe wird durch ein Befestigungselement gelöst, das die im kennzeichnenden Abschnitt des Patentanspruchs 1 angeführten Merkmale aufweist.

Durch den zu einer senkrecht zur Achse der Durchgangsbohrung stehenden Ebene in einem flachen Winkel zum Tellerrand hin auslaufenden Randbereich wird ein elastisches Verhalten des Befestigungselementes parallel zur Achse der Durchgangsbohrung erreicht. Schlagartig auftretende, von dem Bauteil ausgehende Zugkräfte, die innerhalb einer maximal zulässigen Zugkraft des Befestigungspunktes liegen, können somit vom Befestigungselement fedemd kompensiert werden, ohne dass eine Beschädigung des Befestigungselementes, des Verankerungselementes oder der Verbindung zwischen dem Verankerungselement und dem Untergrund erfolgt. Das elastische, fedemde Verhalten des Befestigungselementes bewirkt ausserdem ein Anpressen des Bauteiles an den Untergrund, wenn keine oder nur geringe Zugkräfte von dem Bauteil ausgehen.

Überschreiten die schlagartig auftretenden Zugkräfte die maximal zulässige Zugkraft des Befestigungspunktes so wird das Befestigungselement plastisch derart verformt, dass der Tellerrand des Befestigungselementes von der Oberfläche des Bauteiles beabstandet ist, wenn sich das Bauteil in Ruhelage befindet und auf dem Untergrund aufliegt. Dies ist ein Hinweis darauf, dass eine Zugkraft aufgetreten ist, die über der zulässigen Zugkraft liegt.

Um ein gleichmässiges Verformungsverhalten des Befestigungselementes von der Anschlagschulter bis zum Tellerrand erreichen zu können, erstreckt sich zweckmässigerweise der Randbereich vom Umfangsbereich der Anschlagschulter radial bis zum Tellerrand.

Über die Neigung des Randbereiches gegenüber einer von dem Tellerrand gebildeten Auflageebene ist die vom Befestigungselement aufnehmbare Zugkraft steuerbar. Der Randbereich verläuft daher vorteilhafterweise unter einem Winkel von 15° bis 45° zu der senkrecht zur Achse der Durchgangsbohrung stehenden Ebene.

Damit ein einheitliches Verformungsverhalten bei Befestigungselementen mit unterschiedlichen Aussendurchmessem erzielt werden kann, ist es notwendig, die Höhe des Befestigungselementes unterschiedlich auszubilden. Zweckmässigerweise entspricht daher die parallel zur Achse verlaufende Höhe dem 0,06-fachen bis 0,16-fachen Aussendurchmesser.

Das elastische Verhalten des Befestigungselementes ist über die Wandstärke des Befestigungselementes beeinflussbar. Beispielsweise hat ein Befestigungselement mit einer geringen Wandstärke ein weicheres elastisches Verhalten, als ein Befestigungselement mit einer grossen Wandstärke. Vorzugsweise entspricht die Wandstärke dem 0,010-fachen bis 0,04-fachen Aussendurchmesser.

Die Anschlagschulter des Befestigungselementes dient dem Zusammenwirken mit einer Schulter des Verankerungselementes. Damit diese Schulter und der sich in Zugrichtung an die Schulter anschliessende Bereich des Verankerungselementes den Boden axial nicht überragt, fluchtet vorteilhafterweise die Anschlagschulter im wesentlichen mit dem Tellerrand.

Um eine Verwendung des erfindungsgemässen Befestigungselementes auch bei Aussenanlagen oder in chemischen Bereichen einsetzen zu können, ist zweckmässigerweise das Befestigungselement aus rostfreiem Stahl. Neben dem Befestigungselement kann auch das Verankerungselement aus einem rostfreien Stahl gefertigt sein.

Die Erfindung wird anhand von Zeichnungen, die ein Ausführungsbeispiel wiedergeben, näher erläutert. Es zeigen:
- Fig. 1: ein erfindungsgemässes, an einem Untergrund festgelegtes Befestigungselement, das mit seinem Tellerrand gegen die Oberfläche eines Bauteiles drückt;
- Fig.2: ein plastisch verformtes Befestigungselement gemäss Fig. 1, dessen Tellerrand von der Oberfläche des Bauteiles beabstandet ist.

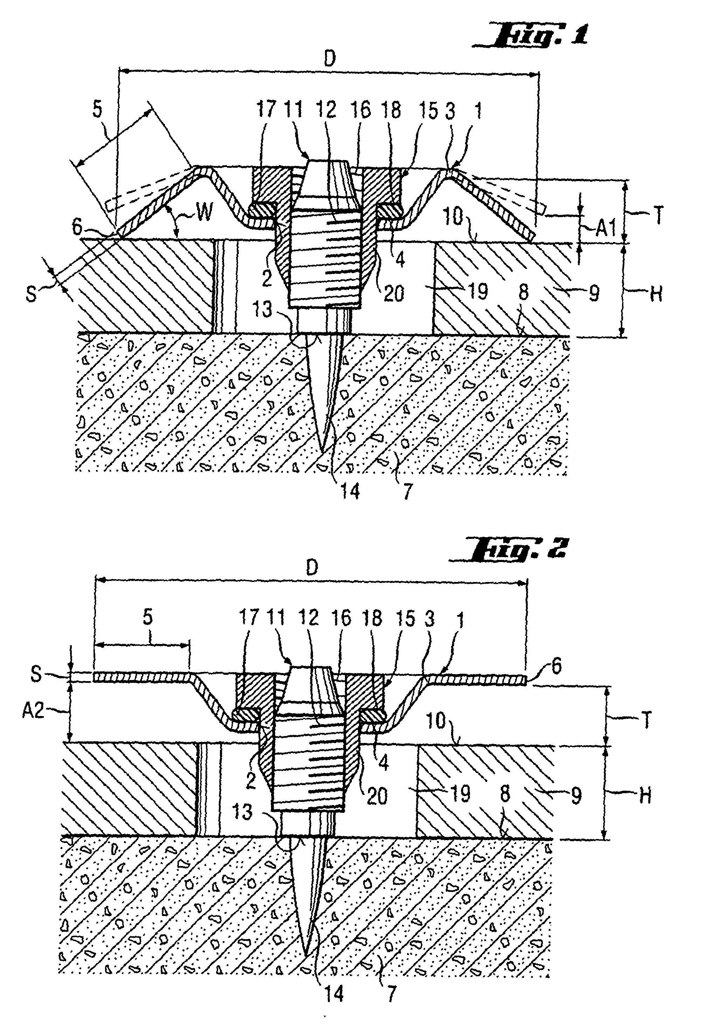

Die Fig. 1 und 2 zeigen andeutungssweise ein Bauteil 9 in Form einer grossen Platte mit der Höhe H, die auf der Oberfläche 8 eines Untergrundes 7 aufliegt. Der nicht gesamthaft dargestellte Untergrund 7 setzt sich aus mehreren voneinander beabstandeten Trägem zusammen, wobei sich das Bauteil 9 über wenigstens zwei Träger erstreckt. Die andeutungsweise dargestellten Träger sind aus Beton hergestellt. Das Bauteil 9 weist eine senkrecht zur Oberfläche 8 des Untergrundes 7 verlaufende Bohrung 19 auf. Der Befestigung dieses Bauteiles 9 auf dem Untergrund 7 dient ein Befestigungselement 1, das über ein Druckstück 15, ein Dämpfelement 17 und ein Verankerungselement 11 an dem Untergrund 7 festgelegt ist.

Das Befestigungselement 1 ist tellerförmig gewölbt ausgebildet und weist aufgrund seiner Form einen Tellerrand 6 und einen vom Tellerrand 6 beabstandeten Boden 3 auf. Die Höhe T des Befestigungselementes entspricht dem Abstand des Tellerrandes 6 vom Boden 3. Ausgehend von dem in Umfangsrichtung geschlossenen, umlaufenden freien Tellerrand 6 erstreckt sich zum Boden 3 hin ein Randbereich 5, der zu einer senkrecht zur Achse der Durchgangsbohrung 2 stehenden Ebene in einem flachen Winkel W zum Tellerrand 6 hin ausläuft. Die Neigung entspricht einem Winkel W von ca 35°. Im zentralen Bereich besitzt das Befestigungselement 1 eine Durchgangsbohrung 2. Im Umfangsbereich der Durchgangsbohrung 2 weist das Befestigungselement 1 eine parallel zur Achse der Durchgangsbohrung 2 in Richtung Tellerrand 6 vom Boden 3 beabstandete, zu diesem hinweisende, die Durchgangsbohrung 2 umgebende Anschlagschulter 4 auf.

Diese Anschlagschulter 4 ist im wesentlichen kreisringförmig ausgebildet und fluchtet im wesentlichen mit dem Tellerrand 6. Der im Bereich des Bodens 3 liegende Übergang von der Anschlagschulter 4 zum Randbereich 5 ist im wesentlichen rund ausgebildet. Der Aussendurchmesser des Befestigungselementes 1 wird vom Tellerrand 6 gebildet. Der Durchmesser der Bohrung 19 in dem Bauteil 9 entspricht im wesentlichen dem vom Übergang gebildeten Durchmesser.

Das Befestigungselement 1 wird von einem Verankerungselement 11 durchsetzt, das mit seinem Verankerungsbereich 14 mittels eines nicht dargestellten pulverkraftbetriebenen Setzgerätes in den Untergrund 7 eingetrieben ist. Eine den Verankerungsbereich 14 radial überragende Gegenfläche 13 des Verankerungselementes 11 stützt sich an der Oberfläche 8 des Untergrundes 7 ab. Entgegen dem Verankerungsbereich 14 schliesst sich an die Gegenfläche 13 ein Aussengewinde 12 an, dessen Durchmesser grösser ist als der Durchmesser der Gegenfläche 13. Auf das Verankerungselement 11 ist ein Druckstück 15 aufgeschraubt dessen Innengewinde 16 mit dem Aussengewinde 12 des Verankerungselementes 11 zusammenwirkt. Das Druckstück 15 weist einen im wesentlichen zylindrisch ausgebildeten Schaftbereich 20 auf, dessen Aussendurchmesser im wesentlichen dem Durchmesser der Durchgangsbohrung 2 des Befestigungselementes 1 entspricht. An diesen Schaftbereich 20 schliesst sich in Richtung Boden 3 des Befestigungselementes 1 ein radial erweiterter Bereich mit einer Schulter 18 und einer nicht dargestellten Schlüsselweite an. Zwischen der Schulter 18 und der Anschlagschulter 4 ist ein Dämpfelement 17 angeordnet, damit Zugkräfte, die auf das Befestigungselement 1 wirken, gedämpft auf das Verankerungselement 11 übertragen werden. Die Summe der parallel zur Längserstreckung des Verankerungselementes erstreckenden Höhen des Dämpfelementes 17 und des radial erweiterten Bereiches des Druckstückes 15 entsprechen im wesentlichen dem Abstand der Anschlagschulter 4 von dem Boden 3. Die Wandstärke S des Befestigungselementes 1 entspricht beispielsweise dem 0,02-fachen Aussendurchmesser D.

Die Festlegung des Bauteiles 9 an dem Untergrund 7 erfolgt folgendermassen: Durch die Bohrung 19 des auf dem Untergrund 7 liegenden Bauteiles 9 hindurch wird das Verankerungselement 11 mittels eines nicht dargestellten, pulverkraftbetriebenen Setzgerätes mit seinem Verankerungsbereich in den Untergrund getrieben. Anschliessend wird das Befestigungselement 1 zusammen mit dem Dämpfelement 17 und dem Druckstück 15 auf das Verankerungselement 11 aufgesetzt und durch Verdrehen des Druckstückes 15 mit dem Verankerungselement 11 formschlüssig verbunden. Durch das Verdrehen des Druckstückes 15 wird eine Versetzung des Befestigungselementes 1 in Richtung Bauteil 9 erreicht, bis das Befestigungselement wie in Fig. 1 dargestellt, unter Vorspannung auf der Oberfläche 10 des Bauteiles 9 aufliegt. Das Befestigungselement 1 verformt sich dabei etwas, so dass der Tellerrand 6 etwas näher beim Boden 3 zu liegen kommt und die Höhe T des Befestigungselementes 1 etwas geringer ist. Das Verdrehen des Druckstückes 15 erfolgt mittels eines nicht dargestellten Werkzeugs, beispielsweise einem Gabelschlüssel, der an der ebenfalls nicht dargestellten Schlüsselweite des Druckstücks 15 angreift. Zusätzlich zur Verformung des Befestigungselementes 1 durch die Vorspannung ist das Befestigungselement 1 in der Lage, sich weiter elastisch zu verformen, wenn vom Bauteil 9 ausgehende Zugkräfte an dem Befestigungselement 1 angreifen. Die Verformung erfolgt dabei in der Weise, dass sich der Tellerrand 6 zum Boden 3 hin um höchstens den Betrag A1 bewegt. Dadurch wird die Neigung des Randbereiches 5 zu einer senkrecht zur Achse der Durchgangsbohrung (2) stehenden Ebene hin flacher.

Übersteigen, wie in Fig. 2 dargestellt, die Zugkräfte die maximal zulässige Zugkraft des Befestigungspunktes, so erfolgt eine plastische Verformung des Befestigungselementes 1 in der Weise, dass der Tellerrand 6 über den Betrag von A1 hinaus zum Boden 3 hin versetzt wird, ohne das Verankerungselement 11 zu beschädigen. Nach dem Nachlassen der Zugkräfte ist ein Abstand zwischen der Oberfläche 10 des Bauteiles 9 und dem Tellerrand 6 für jedermann erkennbar. Dieser Abstand gibt jedermann den Hinweis, dass eine Überbelastung des Befestigungspunktes erfolgt ist. Eine sichere Befestigung des Bauteiles 9 kann durch das Auswechseln des Befestigungselementes 1 erzielt werden.

Das Befestigungselement 1 ist konstruktiv so ausgestaltet, dass selbst dann eine Beschädigung des Druckstückes 15 und des Verankerungselementes 11 verhindert wird, wenn eine Bewegung des Bauteiles 9 in Zugrichtung erfolgt, die den Betrag A2 übersteigt. Die Durchgangsbohrung 2 lässt sich dann radial so weit aufweiten, dass das Befestigungselement 1 über den radial erweiterten Bereich des Druckstückes 15 gezogen werden kann.

## Patentansprüche

1. Tellerförmig gewölbtes Befestigungselement (1) zur Befestigung eines Bauteiles (9) an einem Untergrund (7), mit einem Boden (3) mit in Umfangsrichtung geschlossenem, umlaufenden freien Tellerrand (6), mit zentraler Durchgangsbohrung (2) zur Aufnahme eines Verankerungselementes (11) und einer parallel zur Achse der Durchgangsbohrung (2) in Richtung Tellerrand (6) vom Boden (3) beabstandeten, zu diesem hinweisenden, die Durchgangsbohrung (2) umgebenden Anschlagschulter (4), **gekennzeichnet durch** einen, zu einer senkrecht zur Achse der Durchgangsbohrung (2) stehenden Ebene in einem flachen Winkel (W) zum Tellerrand (6) hin auslaufenden Randbereich (5).

2. Befestigungselement nach Anspruch 1, **dadurch gekennzeichnet, dass** sich der Randbereich (5) vom Umfangsbereich der Anschlagschulter (4) radial bis zum Tellerrand (6) erstreckt.

3. Befestigungselement nach Anspruch 1 oder 2, **dadurch gekennzeichnet, dass** der . Randbereich (5) unter einem Winkel (W) von 15° bis 45° zu der senkrecht zur Achse der Durchgangsbohrung (2) stehenden Ebene verläuft.

4. Befestigungselement nach einem der Ansprüche 1 bis 3, **gekennzeichnet durch** eine parallel zur Achse der Durchgangsbohrung (2) verlaufenden Höhe (T), die dem 0,06-fachen bis 0,16-fachen Aussendurchmesser (D) entspricht.

5. Befestigungselement nach einem der Ansprüche 1 bis 4, **gekennzeichnet durch** eine Wandstärke (S), die dem 0,010-fachen bis 0,04-fachen Aussendurchmesser (D) entspricht.

6. Befestigungselement nach einem der Ansprüche 1 bis 5, **dadurch gekennzeichnet, dass** die Anschlagschulter (4) im wesentlichen mit dem Tellerrand (6) fluchtet.

7. Befestigungselement nach einem der Ansprüche 1 bis 6, **gekennzeichnet durch** rostfreien Stahl als Werkstoff.

## Claims

1. Plateshaped curved fixing element (1) for fixing an assembly component (9) to a base (7), comprising a base (3) with a peripherally closed and peripherally freely movable plate edge (6), with a central throughbore (2) for accommodating an anchoring element (11) and an abutment shoulder (4), which surrounds the throughbore (2) and which is spaced from the base (3) parallel to the axis of the throughbore (2) in the direction of plate edge (6) and oriented towards it, **characterised by** an edge area (5) standing perpendicularly to the axis of the throughbore (2) at an obtuse angle (W) relative to the plate edge (6).

2. Fixing element according to Claim 1, **characterised in that** the edge area (5) extends radially from the peripheral area of the abutment shoulder (4) up to the plate edge (6).

3. Fixing element according to Claim 1 or 2, **characterised in that** the edge area (5) extends at an angle (W) of between 15° and 45° relative to the plane which stands perpendicularly to the axis of the throughbore (2).

4. Fixing element according to one of Claims 1 to 3, **characterised by** a height (T) extending parallel to the axis of throughbore (2) and which corresponds with between 0.06 and 0.16 times the outside diameter (D).

5. Fixing element according to one of Claims 1 to 4, **characterised by** a wall thickness (S) which corresponds with between 0.010 and 0.04 times the outside diameter (D).

6. Fixing element according to one of Claims 1 to 5, **characterised in that** the abutment shoulder (4) is essentially aligned with the plate edge (6).

7. Fixing element according to one of Claims 1 to 6, **characterised by** stainless steel as material.

## Revendications

1. Élément de fixation bombé en forme d'assiette (1) pour la fixation d'un élément structurel (9) à un support (7), avec un fond (3), avec un bord d'assiette périphérique libre (6) fermé dans la direction circonférentielle, avec un trou central débouchant (2) pour la réception d'un élément d'ancrage (11), avec un épaulement de butée (4) qui, parallèlement à l'axe du trou débouchant (2), est distant du fond (3) en direction du bord d'assiette (6), qui est tourné vers le fond (3r) et qui entoure le trou débouchant (2), **caractérisé par** une zone de bord (5) qui s'étend en direction du bord d'assiette (6) selon un angle plat (W) par rapport à un plan perpendiculaire à l'axe du trou débouchant (2).

2. Élément de fixation selon la revendication 1, **caractérisé en ce que** la zone de bord (5) s'étend radialement de la zone circonférentielle de l'épaulement de butée (4) jusqu'au bord d'assiette (6).

3. Élément de fixation selon la revendication 1 ou 2, **caractérisé en ce que** la zone de bord (5) s'étend selon un angle (W) de 15° à 45° par rapport au plan perpendiculaire à l'axe du trou débouchant (2).

4. Élément de fixation selon une des revendications 1 à 3, **caractérisé par** une hauteur (T) qui s'étend parallèlement à l'axe du trou débouchant (2) et qui correspond à 0,06 fois à 0,16 fois le diamètre extérieur (D).

5. Élément de fixation selon une des revendications 1 à 4, **caractérisé par** une épaisseur de paroi (S) qui correspond à 0,010 fois à 0,04 fois le diamètre extérieur (D).

6. Élément de fixation selon une des revendications 1 à 5, **caractérisé en ce que** l'épaulement de butée (4) est sensiblement aligné avec le bord d'assiette (6).

7. Élément de fixation selon une des revendications 1 à 6, **caractérisé en ce que** le matériau employé est de l'acier inoxydable.
